# EUROPÄISCHE PATENTSCHRIFT

(11) **EP 2 325 976 B1**
(45) Veröffentlichungstag und Bekanntmachung des Hinweises auf die Patenterteilung: **20.06.2012**
(21) Anmeldenummer: 10177983.3
(22) Anmeldetag: 21.09.2010
(51) Int. Cl.: H02K 1/17, H02K 23/04, H02K 23/40

(54) **Elektromotor, insbesondere Stell- oder Antriebsmotor in Kraftfahrzeugen**
Electric motor, in particular actuator or drive motor in motor vehicles
Moteur électrique, notamment servomoteur ou moteur d'entraînement dans des véhicules automobiles

(30) Priorität: 20.11.2009 DE 102009046899
(43) Veröffentlichungstag der Anmeldung: 25.05.2011
(73) Patentinhaber: Robert Bosch GmbH, 70442 Stuttgart (DE)
(72) Erfinder: Oberle, Hans-Juergen, 76437 Rastatt (DE)

(56) Entgegenhaltungen:
- WO-A2-2008/056243
- GB-A- 1 342 728
- US-A- 3 836 802
- US-A- 5 109 172

## Beschreibung

Die Erfindung bezieht sich auf einen Elektromotor, insbesondere einen Stell- oder Antriebsmotor in Kraftfahrzeugen, nach dem Oberbegriff des Anspruches 1.

### Stand der Technik

Derartige Elektromotoren werden beispielsweise als Fensterheber oder Sitzverstellmotoren in Kraftfahrzeugen eingesetzt und umfassen ein Polgehäuse, an dessen Wandung Permanentmagnete gehalten sind, sowie ein gegenüber dem Polgehäuse drehbar gelagerten Anker mit einem bestrombaren Ankerpaket zur Erzeugung eines elektromagnetischen Wechselfelds. Die Permanentmagnete an der Innenseite der Polgehäusewandung sind üblicherweise als Ferritmagnete ausgeführt.

Die US 3 836 802 A zeigt einen Elektromotor mit an der Innenseite des Polgehäuses angeordneten Permanentmagneten. Das Polgehäuse ist achteckig ausgeführt, die Permanentmagnete sind jeweils in einem 90°-Winkel zueinander versetzt. Über den Umfang sind vier Magnetpaare mit jeweils einem Permanentmagneten und einem Permanentmagneten verteilt angeordnet. Pro Magnetpaar ist ein Permanentmagnet aus Eisen von einem röhrenförmigen Permanentmagnet aus Seltenen Erden umschlossen. Die Magnetpaare an jeweils einer Seite des Polgehäuses sind zueinander identisch aufgebaut, so dass auch der Elektromotor einen symmetrischen Aufbau aufweist.

Aus der WO 2008/056243 A2 ist ein Elektromotor mit einem Polgehäuse bekannt, an dessen Innenseite über den Umfang verteilt Permanentmagnete angeordnet sind. Gemäß einer Ausführungsvariante ist ein Permanentmagnet aus einem Material mit hoher Flussdichte hergestellt, wohingegen die übrigen Permanentmagnete aus einem Material mit geringerer Flussdichte bestehen. Dadurch ergibt sich ein asymmetrisches magnetisches Feld. Die Geometrie der Permanentmagnete einschließlich ihrer Dicke ist mit Ausnahme der axialen Länge gleich ausgebildet.

Aus der GB 1342 728 ist es bekannt, an der Innenseite eines Polgehäuses eines Elektromotors schalenförmige Permanentmagnete anzuordnen, die gemäß einer Ausführungsvariante aus unterschiedlichen Materialen bestehen können. Zwischen die Magnete können gegebenenfalls weitere Magnete angeordnet werden.

Aufgrund der beengten Platzverhältnisse ist man bestrebt, klein bauende Elektromotoren einzusetzen, die jedoch ungeachtet der reduzierten Größe die geforderte Leistung erbringen müssen. Je nach Einbauposition gibt es Beschränkungen hinsichtlich der zulässigen Dimensionierung des Elektromotors in eine oder mehrere Raumrichtungen.

### Offenbarung der Erfindung

Der Erfindung liegt die Aufgabe zugrunde, mit einfachen Maßnahmen einen Elektromotor so auszuführen, dass eine flexible Anpassung an unterschiedliche Einbauverhältnisse bei hinreichender Motorleistung möglich ist.

Diese Aufgabe wird erfindungsgemäß mit den Merkmalen des Anspruches 1 gelöst. Die Unteransprüche geben zweckmäßige Weiterbildungen an.

Der erfindungsgemäße Elektromotor wird vorzugsweise als Stell- oder Antriebsmotor in Kraftfahrzeugen eingesetzt, beispielsweise als Fensterhebermotor oder Sitzverstellmotor, wobei grundsätzlich auch Anwendungen auf weiteren technischen Gebieten in Frage kommen. Der Elektromotor weist ein Polgehäuse auf, an dessen Wandung Permanentmagnete gehalten sind, sowie einen gegenüber dem Polgehäuse drehbar gelagerten Anker mit einem bestrombaren Ankerpaket zur Erzeugung eines elektromagnetischen Wechselfelds. Der Elektromotor ist insbesondere als Innenläufermotor ausgeführt, wobei grundsätzlich auch Außenläufer-Elektromotoren in Betracht kommen.

Erfindungsgemäß weist der Elektromotor am Polgehäuse mindestens zwei Permanentmagnete aus unterschiedlichen Magnetwerkstoffen auf, deren magnetische Flussdichte sind unterscheidet. Hierbei kommen vorzugsweise sowohl verhältnismäßig kostengünstige Ferritmagnete in Betracht, die eine geringere magnetische Flussdichte aufweisen, als auch Permanentmagnete aus Magnetwerkstoffen mit einer demgegenüber höheren magnetischen Flussdichte, insbesondere Magnetwerkstoffe, die Seltene Erden beinhalten. Derartige Magnetwerkstoffe mit gegenüber Ferritmagneten höherer Flussdichte sind zwar üblicherweise kostenintensiver, allerdings können diese Permanentmagnete kleiner dimensioniert werden, so dass der Kostennachteil durch die Materialeinsparung zumindest teilweise wieder kompensiert wird.

Außerdem können ohne Einschränkung der elektrischen Leistungsfähigkeit kleiner dimensionierte Elektromotoren verwendet werden bzw. bauliche Restriktionen in einer oder in mehreren Raumdimensionen berücksichtigt werden. So sind erfindingsgemäβ die Permanentmagnete in einer ersten Raumrichtung orthogonal zur Elektromotor-Längsachse und in einer zweiten, hierzu senkrechten Raumrichtung aus unterschiedlichen Magnetwerkstoffen gefertigt, so dass in der Raumrichtung mit den Permanentmagneten, welche eine höhere Flussdichte aufweisen, der Elektromotor eine kleinere Ausdehnung besitzen kann. Auf diese Weise kann entweder die Höhe oder die Breite des Elektromotors bei gleichbleibender Leistung reduziert werden.

Auch hinsichtlich der Geometrie können sich die Permanentmagnete mit unterschiedlicher Flussdichte voneinander unterscheiden. Die Permanentmagnete mit geringerer Flussdichte sind vorzugsweise schalenförmig ausgebildet, wohingegen die Permanentmagnete mit höherer Flussdichte entweder Schalenform oder eine sonstige Querschnittsgeometrie aufweisen, beispielsweise als ebene Platte ausgeführt sein können. Hierdurch können zusätzliche konstruktive Anpassungen durchgeführt werden, wobei ein gegebenenfalls verschlechterter magnetischer Fluss, welcher auf eine weniger günstige Querschnittsgeometrie zurückzuführen ist, durch die höhere Flussdichte kompensiert wird.

Des Weiteren weisen erfingsgemäβ die Permanentmagnete mit höherer Flussdichte eine geringere Dicke auf als die Permanentmagnete mit geringerer Flussdichte. Auch auf diese Weise können verschiedene bauliche Einschränkungen berücksichtigt werden und die Außendimension des Elektromotors an bauliche Gegebenheiten angepasst werden.

Ein zusätzlicher positiver Effekt, der auf die Verwendung unterschiedlicher Magnetwerkstoffe zurückzuführen ist, liegt in der Robustheit des Magnetkreises gegenüber dem Einsatz des Elektromotors bei unterschiedlichen Temperaturen. Temperaturempfindlichkeiten der Magnetwerkstoffe können gegenseitig kompensiert werden, derart, dass eine Empfindlichkeit eines Magnetwerkstoffes auf hohe Temperaturen durch eine entsprechende Unempfindlichkeit des zweiten Magnetwerkstoffes bei hohen Temperaturen und eine Empfindlichkeit eines Magnetwerkstoffes auf tiefe Temperaturen durch eine entsprechende Unempfindlichkeit des anderen Magnetwerkstoffes bei tiefen Temperaturen kompensiert wird.

Hinsichtlich der axialen Länge der Permanentmagnete kommen verschiedene Ausführungen in Betracht. So ist es beispielsweise möglich, die Permanentmagnete, welche aus unterschiedlichen Magnetwerkstoffen bestehen, gleich lang auszuführen und insbesondere mit der gleichen Länge wie den Anker zu versehen. Daneben kommen aber auch Ausführungen mit unterschiedlichen axialen Längen in Betracht, wobei sich sowohl die Länge der Permanentmagnete unterschiedlicher Magnetwerkstoffe zueinander unterscheiden kann als auch die Permanentmagnete in Bezug auf die axiale Länge des Ankers. Bei unterschiedlichen axialen Längen der Permanentmagnete gegenüber dem Anker kommt sowohl ein Überstand als auch ein Unterstand in Betracht.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt quer zur Längsachse eines Elektromotors, der als Innen- läufermotor mit einem Polgehäuse mit an der Innenseite angeordneten Permanentmagneten ausgeführt ist, wobei winkelversetzt Permanent- magnete aus unterschiedlichen Magnetwerkstoffen und mit unterschied- licher Geometrie angeordnet sind,
- Fig. 2: einen Schnitt gemäß Schnittlinie II-II aus Fig. 1

In den Figuren sind gleiche Bauteile mit gleichen Bezugszeichen versehen.

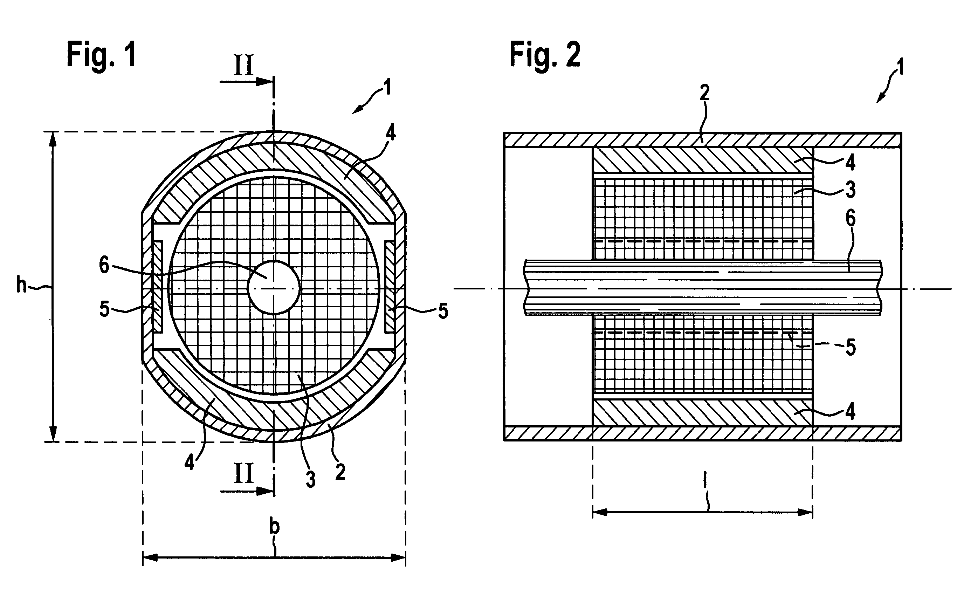

Der in den Fig. 1 und 2 dargestellte Elektromotor 1 ist als Innenläufermotor ausgeführt und besteht aus einem umgreifenden Polgehäuse 2 und einem im Inneren des Polgehäuses 2 drehbar gelagerten Anker 3. An der Polgehäuseinnenwand sind Permanentmagnete 4, 5 angeordnet, wobei zwischen der Mantelfläche des Ankers 3 und der radial innen liegenden Seite der Permanentmagnete 4 und 5 ein kleiner Luftspalt besteht. Der Anker 3 ist Träger eines bestrombaren Ankerpakets und ist auf eine Rotorwelle 6 aufgeschoben.

Der dargestellte Elektromotor 1 ist als vierpoliger Motor ausgeführt und umfasst an der Innenwand des Polgehäuses 2 über den Umfang verteilt insgesamt vier Permanentmagnete 4, 5, wobei jeweils zwei diametral gegenüberliegende Permanentmagnete 4 bzw. 5 sowohl im Hinblick auf die Geometrie als auch den Magnetwerkstoff gleich ausgebildet sind. So sind die oben und unten liegenden Permanentmagnete 4 jeweils schalenförmig ausgebildet und erstrecken sich über einen Winkelabschnitt von jeweils etwa 120°.

In Querrichtung, also gegenüber den beiden Permanentmagneten 4 und 5 um 90° versetzt, befinden sich an der Polgehäuseinnenwand zwei weitere, diametral gegenüberliegende Permanentmagnete 5, die zueinander gleichartig im Hinblick auf die Geometrie und den Magnetwerkstoff ausgebildet sind, sich jedoch von den Permanentmagneten 4 unterscheiden. Die Permanentmagnete 5 sind als ebene Platte ausgebildet, wobei die in Radialrichtung gemessene Dicke der Platte geringer ist als die radiale Dicke der schalenförmigen Permanentmagnete 4. Die Permanentmagnete 5 bestehen aus einem Magnetwerkstoff mit höherer Flussdichte als die Permanentmagnete 4. Vorzugsweise sind die Permanentmagnete 5 aus einem Werkstoff unter Verwendung Seltener Erden gefertigt, wohingegen die Permanentmagnete 4 als kostengünstige Ferritmagnete ausgeführt sind.

Aufgrund der schmaleren Ausführung der Permanentmagnete 5 mit höherer magnetischer Flussdichte ist die Erstreckung b des Elektromotors 1 in Querrichtung kleiner als die Erstreckung h des Elektromotors in der Höhe. Der Unterschied in der geringeren Breite b gegenüber der Höhe h liegt zum einen in der geringeren Dicke der Permanentmagnete 5 gegenüber dem Permanentmagneten 4 und zum andern in der Ausführung als ebene Platte im Vergleich zu der schalenförmigen Geometrie der Permanentmagnete 4. Die Wandung des Polgehäuses 2 ist im Bereich der Permanentmagnete 5 ebenfalls eben bzw. geradlinig ausgeführt, so dass ein flächiger Kontakt zwischen der Innenwand des Polgehäuses und dem Permanentmagneten 5 gegeben ist und das Polgehäuse an dieser Stelle eine Abflachung aufweist, wodurch die geringere Breite b im Vergleich zur Höhe h zustande kommt. Im Übrigen besitzt das Polgehäuse 2 eine runde Querschnittsform.

Im Ausführungsbeispiel ist ein vierpoliger Elektromotor dargestellt. Grundsätzlich kommt aber ein beliebiges n-poliges Motordesign mit unterschiedlichen Kombinationen von Permanentmagneten mit niedrigeren und höheren magnetischen Flussdichten in Betracht, insbesondere in abwechselnder Anordnung in Umfangsrichtung.

Wie dem Längsschnitt gemäß Fig. 2 zu entnehmen, weisen die Permanentmagnete 4 und 5 die gleiche axiale Länge I wie der Anker 3 auf. Grundsätzlich möglich sind aber auch Abweichungen in der axialen Länge der Permanentmagnete 4, 5 gegenüber dem Anker 3, beispielsweise dergestalt, dass entweder nur die Permanentmagnete 4 oder die Permanentmagnete 5 oder beide Permanentmagnetgruppen 4, 5 eine größere oder geringere axiale Erstreckung als der Anker 3 aufweisen. Hierbei kommen sowohl Kombinationen in Betracht, bei denen die Permanentmagnete 4 und 5 jeweils kürzer oder jeweils länger als der Anker sind, als auch Kombinationen, bei denen eine Permanentmagnetgruppe einen axialen Überstand und die andere Permanentmagnetgruppe einen axialen Unterstand aufweist. Schließlich ist auch die Kombination möglich, dass eine Permanentmagnetgruppe die gleiche axiale Länge wie der Anker und die zweite Permanentmagnetgruppe einen Ankerüber- oder Ankerunterstand aufweist.

## Patentansprüche

1. Elektromotor, insbesondere Stell- oder Antriebsmotor in Kraftfahrzeugen, mit einem Polgehäuse (2), an dessen Wandung Permanentmagnete (4, 5) gehalten sind, und einem gegenüber dem Polgehäuse (2) drehbar gelagerten Anker (3), wobei mindestens zwei Permanentmagnete (4, 5) aus unterschiedlichen Magnetwerkstoffen am Polgehäuse (2) gehalten sind und sich die magnetische Flussdichte der Magnetwerkstoffe unterscheidet, **dadurch gekennzeichnet, dass** Permanentmagnete (4) in einer ersten Raumrichtung und Permanentmagnete (5) in einer zweiten, hierzu senkrechten Raumrichtung aus unterschiedlichen Magnetwerkstoffen bestehen, dass die Permanentmagnete (5) mit höherer Flussdichte eine geringere Dicke aufweisen als die Permanentmagnete (4) mit kleinerer Flussdichte und dass in der Raumrichtung mit den Permanentmagneten (5), welche eine höhere Flussdichte aufweisen, der Elektromotor eine kleinere Ausdehnung besitzt.

2. Elektromotor nach Anspruch 1, **dadurch gekennzeichnet, dass** die Permanentmagnete (4, 5), die aus unterschiedlichen Magnetwerkstoffen gefertigt sind, eine unterschiedliche Geometrie aufweisen.

3. Elektromotor nach einem der Ansprüche 1 oder 2, **dadurch gekennzeichnet, dass** die Permanentmagnete (5) mit höherer Flussdichte als ebene Platte ausgebildet sind.

4. Elektromotor nach einem der Ansprüche 1 bis 3, **dadurch gekennzeichnet, dass** die Permanentmagnete (5) mit höherer Flussdichte aus Seltenen Erden bestehen.

5. Elektromotor nach einem der Ansprüche 1 bis 4, **dadurch gekennzeichnet, dass** die Permanentmagnete (4) mit geringerer Flussdichte als Ferritmagnete ausgebildet sind.

6. Elektromotor nach einem der Ansprüche 1 bis 5, **dadurch gekennzeichnet, dass** alle Permanentmagnete (4, 5) die gleiche axiale Länge (I) aufweisen.

7. Elektromotor nach Anspruch 6, **dadurch gekennzeichnet, dass** die Permanentmagnete (4, 5) die gleiche axiale Länge (I) wie der Anker (3) aufweisen.

8. Elektromotor nach einem der Ansprüche 1 bis 5, **dadurch gekennzeichnet, dass** sich die axiale Länge (I) der Permanentmagnete (4, 5) unterscheidet.

9. Elektromotor nach einem der Ansprüche 1 bis 5, **dadurch gekennzeichnet, dass** die Permanentmagnete (4, 5) und der Anker (3) eine unterschiedliche axiale Länge (I) aufweisen.

## Claims

1. Electric motor, in particular actuating motor or drive motor in motor vehicles, having a pole housing (2) with permanent magnets (4, 5) mounted on the wall of said pole housing, and having an armature (3) which is rotatably mounted relative to the pole housing (2), wherein at least two permanent magnets (4, 5) which are composed of different magnetic materials are mounted on the pole housing (2) and the magnetic flux density of the magnetic materials differs, **characterized in that** permanent magnets (4) in a first spatial direction and permanent magnets (5) in a second spatial direction which is perpendicular to the said first spatial direction are composed of different magnetic materials, **in that** the permanent magnets (5) with a relatively high flux density have a lower thickness than the permanent magnets (4) with a relatively low flux density, and **in that** the electric motor has a smaller extent in the spatial direction with the permanent magnets (5) which have a relatively high flux density.

2. Electric motor according to Claim 1, **characterized in that** the permanent magnets (4, 5) which are produced from different magnetic materials have a different geometry.

3. Electric motor according to one of Claims 1 and 2, **characterized in that** the permanent magnets (5) with a relatively high flux density are in the form of a flat plate.

4. Electric motor according to one of Claims 1 to 3, **characterized in that** the permanent magnets (5) with a relatively high flux density are composed of rare earths.

5. Electric motor according to one of Claims 1 to 4, **characterized in that** the permanent magnets (4) with a relatively low flux density are in the form of ferrite magnets.

6. Electric motor according to one of Claims 1 to 5, **characterized in that** all the permanent magnets (4, 5) have the same axial length (1).

7. Electric motor according to Claim 6, **characterized in that** the permanent magnets (4, 5) have the same axial length (1) as the armature (3).

8. Electric motor according to one of Claims 1 to 5, **characterized in that** the axial length (1) of the permanent magnets (4, 5) differs.

9. Electric motor according to one of Claims 1 to 5, **characterized in that** the permanent magnets (4, 5) and the armature (3) have a different axial length (1).

## Revendications

1. Moteur électrique, notamment servomoteur ou moteur d'entraînement de véhicule automobile, présentant un boîtier polaire (2) sur la paroi duquel sont maintenus des aimants permanents (4, 5), ainsi qu'un induit (3) monté à rotation par rapport au boîtier polaire (2), au moins deux aimants permanents (4, 5) en matériaux magnétiques différents étant maintenus sur le boîtier polaire (2) et les densités de flux magnétique des matériaux magnétiques étant différentes,
**caractérisé en ce que**
les aimants permanents (4) sont constitués de matériaux magnétiques différents dans une première direction de l'espace et les aimants permanents (5) sont constitués de matériaux magnétiques différents dans une deuxième direction de l'espace perpendiculaire à la première,
**en ce que** les aimants permanents (5) à haute densité de flux ont une épaisseur moindre que les aimants permanents (4) à basse densité de flux et
**en ce que** le moteur électrique présente une extension plus petite dans la direction de l'espace qui présente les aimants permanents (5) à haute densité de flux.

2. Moteur électrique selon la revendication 1, **caractérisé en ce que** les aimants permanents (4, 5) réalisés en matériaux magnétiques différents ont des géométries différentes.

3. Moteur électrique selon l'une des revendications 1 ou 2, **caractérisé en ce que** les aimants permanents (5) à haute densité de flux sont configurés en plaques planes.

4. Moteur électrique selon l'une des revendications 1 à 3, **caractérisé en ce que** les aimants permanents (5) à haute densité de flux sont constitués de terres rares.

5. Moteur électrique selon l'une des revendications 1 à 4, **caractérisé en ce que** les aimants permanents (4) à basse densité de flux sont configurés comme aimants de ferrite.

6. Moteur électrique selon l'une des revendications 1 à 5, **caractérisé en ce que** tous les aimants permanents (4, 5) ont la même longueur axiale (1).

7. Moteur électrique selon la revendication 6, **caractérisé en ce que** les aimants permanents (4, 5) ont la même longueur axiale (1) que l'induit (3).

8. Moteur électrique selon l'une des revendications 1 à 5, **caractérisé en ce que** les aimants permanents (4, 5) ont des longueurs axiales (1) différentes.

9. Moteur électrique selon l'une des revendications 1 à 5, **caractérisé en ce que** les aimants permanents (4, 5) et l'induit (3) ont des longueurs axiales (1) différentes.
